# EUROPEAN PATENT APPLICATION

(11) **EP 4 763 649 A1**
(43) Date of publication of application: **24.06.2026**
(21) Application number: 25152637.2
(22) Date of filing: 17.01.2025
(51) Int. Cl.: B60W 40/08, B60W 50/14

(54) **FATIGUE DRIVING DETECTION SYSTEM AND METHOD THEREOF**

(30) Priority: 23.12.2024 TW 113150266
(71) Applicant: EGK Technology Co., Ltd., Kaohsiung City 814037 (TW)
(72) Inventor: Lin, Yi-Cheng, 814037 Kaohsiung City (TW); Chen, Jia-Wei, 814037 Kaohsiung City (TW); Liu, Chun-Yu, 814037 Kaohsiung City (TW)
(74) Representative: Stevens Hewlett & Perkins

(57) **Abstract**

Disclosed is a fatigue driving detection system and method thereof. The method involves a data collection step: collecting a data from a vehicle to continuously monitor a behavior of a driver and a movement of the vehicle; a data processing step: transmitting the data to a cloud platform in real time and performing a preliminary data processing step; a data analysis step: comparing the data with a rule table and generating a comparison result, and combining the comparison result with a schedule information to evaluate a fatigue status of the driver and determine whether a warning prompt needs to be issued; and a data feedback and optimization step: recording the data, the comparison result and the warning prompt, and then feeding them back to the cloud platform through a machine learning model to optimize the rule table. This ensures the accuracy and timeliness of warnings, thereby effectively improving driving safety.

## Description

### PRIOR ART

Fatigue driving detection technology mainly includes detection methods based on behavior analysis and vehicle movements. Behavior analysis is observing the driver's facial expressions, head or body posture changes by cameras or sensors. Vehicle movement detection infers the driver's concentration by analyzing the vehicle's driving status and changes in vehicle speed. In addition, these technologies are often combined with artificial intelligence and machine learning algorithms to improve the accuracy and immediacy of detection. Each of these existing technologies has its own advantages and disadvantages, often requiring a balance among accuracy, cost, and ease of use.

However, some high-precision detection systems require expensive hardware equipment, such as high-resolution cameras, which may increase the overall cost of the vehicle and limit its popularity in the mass market.

In addition, existing advanced driver assistance systems (ADAS) or driver monitoring systems (DMS) can usually only judge the behavior and status of the driver from a single aspect. Although these systems have been pre-installed in many vehicle manufacturers and fleets, due to the limitations of their detection methods, they often issue too many warnings to the driver, which may not only lead to a decrease in the driver's alertness, but may even cause warning fatigue, thereby affecting driving safety.

### BACKGROUND OF THE INVENTION

The present invention relates to the technical field of fatigue driving detection, in particular to a fatigue driving detection system and a method thereof.

### SUMMARY OF THE INVENTION

A primary objective of the present invention is to provide a fatigue driving detection system and method thereof. Continuously monitor and collect driver behavior data and vehicle movement data, and compare these data with built-in or pre-set rule tables, and further consider the schedule information of the driver, and then, based on the results of the comprehensive analysis, the warning mechanism is dynamically adjusted, and when necessary, a warning is issued to remind the driver to take a rest or adjust the driving state; through this multi-level analysis and judgment method, the accuracy and timeliness of warnings are ensured, thereby effectively improving driving safety.

In order to achieve the aforementioned objective, the present invention provides a fatigue driving detection method. The fatigue driving detection method includes a data collection step: collecting a data from a vehicle to continuously monitor a behavior of a driver and a movement of the vehicle; a data processing step: transmitting the data to a cloud platform in real time and performing a preliminary data processing step; a data analysis step: comparing the data with a rule table and generating a comparison result, and combining the comparison result with a schedule information to evaluate a fatigue status of the driver and determine whether a warning prompt needs to be issued; and a data feedback and optimization step: recording the data, the comparison result and the warning prompt, and then feeding them back to the cloud platform through a machine learning model to optimize the rule table.

In some embodiments, the data includes a physiological and behavioral data corresponding to the behavior of the driver and a driving data corresponding to the movement of the vehicle.

In some embodiments, the driving data at least includes vehicle speed, steering wheel angle, and lane departure, and the physiological and behavioral data at least includes facial expression, blink frequency, and head posture.

In some embodiments, the preliminary data processing step includes data cleaning, data filtering and data standardization.

In some embodiments, the rule table includes a standard parameter and a threshold for various driving behaviors, and the standard parameter and the threshold are formulated based on historical data and expert opinions.

In some embodiments, the schedule information includes a current working hour of the driver and whether the driving time is day or night.

In some embodiments, the warning prompt at least includes a sound prompt, a visual warning or a vibration prompt

The present invention further provides a fatigue driving detection system. The fatigue driving detection system includes a data collector, disposed on a vehicle and configured to collect a data from the vehicle to continuously monitor a behavior of a driver and a movement of the vehicle; a data processing unit, communicated to the data collector and configured to transmit the collected data to a cloud platform in real time and perform a preliminary data processing step; and an analyzer, communicated to the data processing unit and the cloud platform, and configured to compare the data with a rule table and generate a comparison result, and combine the comparison result with a schedule information to evaluate a fatigue status of the driver and determine whether a warning prompt needs to be issued, and record the data, the comparison result and the warning prompt, and then feed them back to the cloud platform through a machine learning model to optimize the rule table.

In some embodiments, the data collector includes an advanced driver assistance system and a driver monitoring system that are communicated with each other.

In some embodiments, the data includes a physiological and behavioral data corresponding to the behavior of the driver and a driving data corresponding to the movement of the vehicle.

In some embodiments, the advanced driver assistance system correspondingly collects the driving data, the driver monitoring system correspondingly collects the physiological and behavioral data.

In some embodiments, the driving data at least includes vehicle speed, steering wheel angle, and lane departure, and the physiological and behavioral data at least includes facial expression, blink frequency, and head posture.

In some embodiments, the rule table includes a standard parameter and a threshold for various driving behaviors, and the standard parameter and the threshold are formulated based on historical data and expert opinions.

In some embodiments, the schedule information includes a current working hour of the driver and whether the driving time is day or night.

In some embodiments, the warning prompt at least includes a sound prompt, a visual warning or a vibration prompt.

In order to make the above objectives, features and advantages of the present invention more obvious and understandable, the specific embodiments listed in the drawings are described in detail below.

### BRIEF DESCRIPTION OF DRAWINGS

Aspects of the present invention are best understood from the following detailed description when read with the accompanying figures. It is noted that, in accordance with the standard practice in the industry, various features are not drawn to scale. In fact, the dimensions of the various features may be increased or reduced for clarity of discussion.
Figure 1 is a block diagram of a fatigue driving detection system according to the present invention.
Figure 2 is a flow chart of a fatigue driving detection method according to the present invention.

### DETAILED DESCRIPTION OF THE INVENTION

It will be appreciated that, although specific embodiments of the present invention are described herein for purposes of illustration, various modifications may be made without departing from the spirit and scope of the present invention.

In the following description, certain specific details are set forth in order to provide a thorough understanding of various aspects of the disclosed subject matter. However, the disclosed subject matter may be practiced without these specific details. In some instances, well-known structures and methods of power delivery comprising embodiments of the subject matter disclosed herein have not been described in detail to avoid obscuring the descriptions of other aspects of the present invention.

Unless the context requires otherwise, throughout the specification and claims that follow, the word "comprise," "have," "include," and variations thereof, such as "comprises," "comprising," "having," "including" are to be construed in an open, inclusive sense, that is, as "including, but not limited to."

Reference throughout the specification to "one embodiment" or "an embodiment" means that a particular feature, structure, or characteristic described in connection with the embodiment is included in at least one embodiment. Thus, the appearance of the phrases "in one embodiment" or "in an embodiment" in various places throughout the specification are not necessarily all referring to the same aspect. Furthermore, the particular features, structures, or characteristics may be combined in any suitable manner in one or more aspects of the present invention.

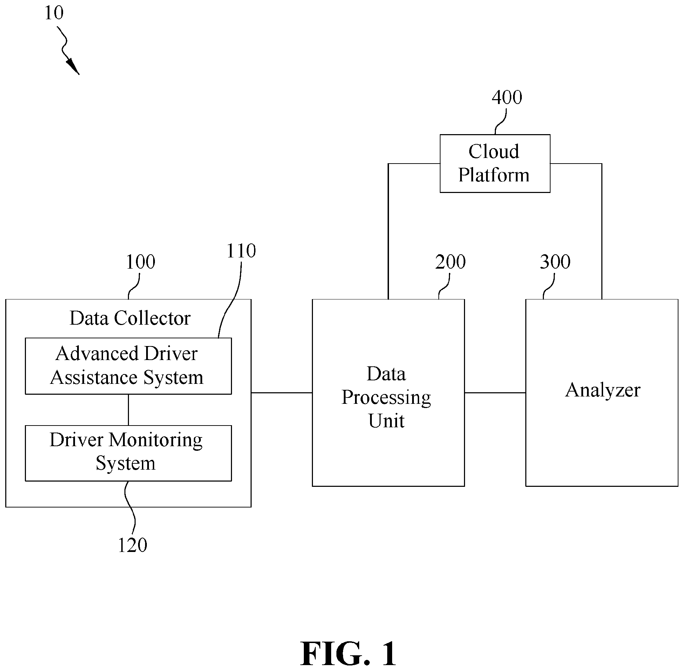

Figure 1 is a block diagram of a fatigue driving detection system 10 according to the present invention.

Please refer to Figure 1, the fatigue driving detection system 10 of the present invention includes a data collector 100, a data processing unit 200 and an analyzer 300.

The data collector 100 may be disposed on a vehicle (not shown). The data collector 100 may be configured to collect a data from the vehicle to continuously monitor a behavior of a driver and a movement of the vehicle. In some embodiments, the data collector 100 may include an advanced driver assistance system (ASAS) 110 and a driver monitoring system (DMS) 120 that are communicated with each other. In some embodiments, the data may include a physiological and behavioral data corresponding to the behavior of the driver and a driving data corresponding to the movement of the vehicle, so that the advanced driver assistance system 110 may correspondingly collect the driving data and the driver monitoring system 120 may correspondingly collect the physiological and behavioral data. In some embodiments, the driving data at least includes vehicle speed, steering wheel angle, and lane departure, and the physiological and behavioral data at least includes facial expression, blink frequency, and head posture.

The data processing unit 200 may be communicated to the data collector 100. The data processing unit 200 may be configured to transmit the collected data to a cloud platform 400 in real time and perform a preliminary data processing step. In some embodiments, the step of preliminary data processing step may include data cleaning, data filtering and data standardization.

The analyzer 300 may be communicated to the data processing unit 200 and the cloud platform 400. The analyzer 300 may be configured to compare the data with a rule table and generate a comparison result, and combine the comparison result with a schedule information to evaluate a fatigue status of the driver and determine whether a warning prompt needs to be issued, and record the data, the comparison result and the warning prompt, and then feed them back to the cloud platform through a machine learning model to optimize the rule table. In some embodiments, the rule table includes a standard parameter and a threshold for various driving behaviors, and the standard parameter and the threshold are formulated based on historical data and expert opinions. In some embodiments, the schedule information includes a current working hour of the driver and whether the driving time is day or night, but it is not limited thereto. In some embodiments, the warning prompt at least includes a sound prompt, a visual warning or a vibration prompt, but it is not limited thereto.

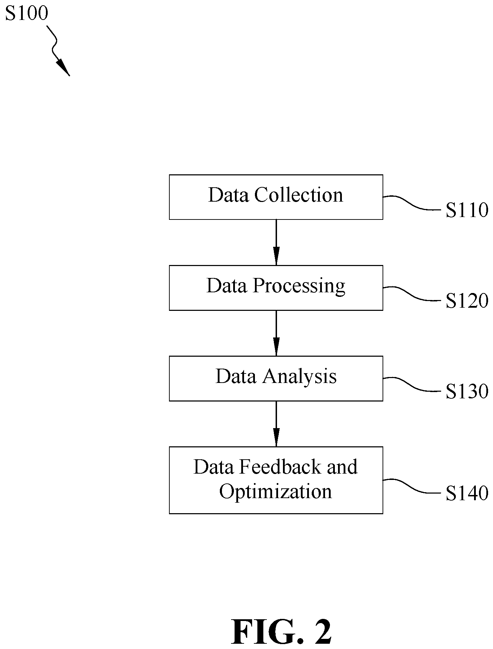

Figure 2 is a flow chart of a fatigue driving detection method S100 according to the present invention.

Please refer to Figure 1 and Figure 2, the fatigue driving detection method S100 shown in Figure 2 of the present invention is implemented by the fatigue driving detection system 10 shown in Figure 1; and the fatigue driving detection method S100 of the present invention may include steps S110, S120, S130 and S140, which are respectively described as follows.

Step S110 is a data collection step. Step S110 is to collect a data from a vehicle (not shown) to continuously monitor a behavior of a driver and a movement of the vehicle. An advanced driver assistance system (ADAS) 110 and a driver monitoring system (DMS) 120 disposed on the vehicle (not shown) serve as the main source of the data collector 100 to continuously monitor the behavior of the driver and the movement of the vehicle; wherein, the advanced driver assistance system (ADAS) 110 is responsible for collecting vehicle driving-related data (i.e., the aforementioned driving data), such as vehicle speed, steering wheel angle, and lane departure, but it is not limited thereto; and the driver monitoring system (DMS) 120 focuses on the physiological and behavioral data of the driver (i.e., the aforementioned physiological and behavioral data), such as facial expression, blink frequency, and head posture, but is not limited thereto.

In some embodiments, the collection of driving data including vehicle movement data may be accomplished by transmitting vehicle speed, steering wheel angle, acceleration and other data from the advanced driver assistance system (ADAS) 110 via Over The Air (OTA). In some embodiments, the collection of physiological and behavioral data including the physiological data of the driver may transmit physiological indicators from the driver monitoring system (DMS) 120 via Over The Air (OTA), such as blink rate, facial expression, head posture, etc.

Step S120 is a data processing step. Step S120 is to transmit the data to a cloud platform (i.e., cloud platform 400) in real time and performing a preliminary data processing step. In some embodiments, the preliminary data processing step may include data cleaning, data filtering and data standardization.

The data cleaning may include an error detection and correction, a missing value processing and a deduplication. The error detection and correction may include outlier identification and data correction. The outlier identification detects whether the blink frequency exceeds the normal range to identify an abnormal point; for example, the normal range of the blink frequency may be 10 times per minute, but it is not limited thereto. The data correction means that if the detected abnormal blink frequency is confirmed to be a false detection, it will be corrected to a reasonable value; if it cannot be corrected, the data point (e.g., the abnormal point) will be deleted. The missing value processing may include missing value identification, imputing missing values, and deleting missing values. The missing value identification is finding that vehicle speed data cannot be obtained during a certain period of time. The missing values are filled by interpolation using the average vehicle speed at the two time points before and after. The deleting missing values means that if a driver fails to clock in multiple times, some of the driver's working hour records will be deleted. The duplicate data deletion checks whether there are multiple identical vehicle speed records at each time point, retains one valid record, and deletes the remaining duplicate data.

In some embodiments, the data filtering may include noise filtering, feature selection, and time synchronization. The noise filtering may include smoothing processing and filter application. The smoothing process applies a moving average method to continuous vehicle speed data to reduce the impact of instantaneous fluctuations. The filter application is to apply a low-pass filter to the head posture data of the driver to remove high-frequency noise. The feature selection may include correlation analysis and dimensionality reduction techniques. The correlation analysis calculates the correlation coefficient between each feature and fatigue driving, retaining high correlation features such as blink frequency, head posture changes, and continuous driving time. The dimensionality reduction technology uses a principal component analysis (PCA) to reduce multiple facial expression features to two main components, reducing the data dimension. The time synchronization ensures that the data time of the advanced driver assistance system (ADAS) 110, the driver monitoring system (DMS) 120, and the attendance system are consistent. A time window of, for example, 10 seconds is set to aggregate multi-source data.

In some embodiments, the data normalization may include range scaling, dimension transformation, and data consistency checking. The data scaling involves scaling the vehicle speed data from 0-120 km/h to the 0-1 range, and standardizing the blink frequency data by Z-Score so that the mean value is 0 and the standard deviation is 1. The dimensional conversion converts the unit of vehicle speed from kilometers/hour to meters/second to ensure that the units of all movement data are consistent. According to the importance, the feature ratio of head posture is adjusted to 1.5 times that of other features to highlight its impact on fatigue recognition. The data consistency check is to verify whether all standardized data is within the expected range (for example, the normalized vehicle speed is between 0 and 1), and to check the data distribution to ensure that it meets the input requirements of a subsequent machine learning model. In some embodiments, an open source stream processing platform (Apache Kafka) may be used to process data streams from vehicles and drivers in real time, and a trained model may be used for fatigue driving detection.

Step S130 is a data analysis step. Step S130 is compare the data with a rule table and generating a comparison result, and combining the comparison result with a schedule information to evaluate a fatigue status of the driver and determine whether a warning prompt needs to be issued. In some embodiments, the rule table includes a standard parameter and a threshold for various driving behaviors, and the standard parameter and the threshold are formulated based on historical data and expert opinions. In some embodiments, when the model recognizes that a driver may be driving while fatigued, it immediately issues an alert through a warning system in the vehicle and/or simultaneously notifies the fleet manager to intervene.

In some embodiments, the schedule information includes a current working hour of the driver and whether the driving time is day or night. In some embodiments, for the schedule information, step S130 may include driver attendance and working hour data processing, day and night data analysis, environmental factor data integration, and time period feature generation. The driver attendance and working hour data processing includes attendance data integration, working hour calculation and working hour standardization. The attendance data integration collects the driver's attendance records, for example, the daily working time is 08:00, the off-duty time is 17:00, and the lunch break is 1 hour; then correct the clocking errors to ensure accurate records. For example, if finding that the clocking-in time is wrong on a certain day, corrections will be made. The working hour calculation may include the calculation of total working hours and the calculation of continuous driving hours. The calculation of total working hours calculates the driver's total working hours per day, for example, 8 hours (excluding lunch break). The continuous driving hour calculation finds that the driver had a driving record of 6 consecutive hours on a certain day, exceeding the 4-hour driving limit stipulated by the company. The working hour standardization compares daily working hour data with labor regulations, marks drivers' overtime driving situations, and generates features, such as "exceeding prescribed working hours" (yes/no), continuous driving time (numeric type), etc. The data analysis of day and night is to identify the time period. For example, the daily driving data is divided into two periods according to time: daytime (i.e., 06:00-18:00) and night (i.e., 18:00-06:00), and the special time periods, such as late at night (00:00-04:00), are marked independently because driving behavior patterns may be different. The environmental factor data integration collects and integrates light intensity data and finds that insufficient light at night will increase the risk of driver fatigue; obtains traffic condition data and finds that traffic flow is low at night, which may affect driver alertness. The time period feature generation is based on day and night data to generate different fatigue driving risk features, such as "night driving" (yes/no); the weight of the entire machine learning model increases the importance of risk assessment for night driving.

Step S140 is a data feedback and optimization step. Step S140 is to record the data, the comparison result and the warning prompt, and then feed them back to the cloud platform through a machine learning model to optimize the rule table. Step S140 may include continuous model training and system function improvement. The continuous model training means retraining the machine learning model based on newly collected data on a regular basis (for example, every month) to ensure that the machine learning model adapts to the latest driving behavior patterns. An incremental learning method may be used to gradually incorporate newly collected data into the training of the machine learning model to keep the machine learning model up-to-date and accurate. The system function improvement is based on actual application feedback, integrating the existing Over The Air (OTA) technology, adding a heart rate monitoring function, integrating physiological indicators into the fatigue driving detection system 10 of the present invention, and an early warning threshold may be adjusted to reduce the false alarm rate and improve the practicality and driver acceptance of the fatigue driving detection system 10.

The training of machine learning models may include feature engineering, model selection and training, and model evaluation and tuning. The feature engineering integrates vehicle speed, blink frequency, head posture, working hours features, time period features, etc. to generate a final feature set. The model selection and training selects a random forest as an initial model and uses standardized historical data for training. The model evaluation and tuning evaluates the model through cross-validation and adjusts the number and depth of decision trees to increase the accuracy to 95%.

In some embodiments, the data after data cleaning, data filtering, and data standardization may be stored in the cloud platform 400 (such as AWS (Amazon Web Services) cloud database), and appropriate data partitions and indexes may be set to improve query efficiency.

Finally, after step S140 (that is, the data feedback and optimization step), a data visualization and reporting step may be performed. The data visualization may be achieved through data dashboards. For example, the real-time monitoring dashboard may display the current driving status, fatigue warning, working hour status, etc. of all vehicles to support real-time monitoring by administrators, while the historical data analysis dashboard may present the trend of fatigue driving in the past week, the distribution of working hours of each driver, the frequency of fatigue driving in different time periods, etc. The data report may automatically generate a fatigue driving report and a detailed fatigue analysis report. The system (i.e., the fatigue driving detection system 10 of the present invention) may automatically generate the fatigue driving report every day, including key indicators, abnormal analysis and recommended measures, and can provide customized report options, allowing the administrator to generate the detailed fatigue analysis report for a specific driver or route.

To sum up, the fatigue driving detection system 10 and the fatigue driving detection method S100 of the present invention may continuously monitor and collect driver behavior data and vehicle movement data, and compare these data with built-in or pre-set rule tables, and further consider the schedule information of the driver, and then, based on the results of the comprehensive analysis, the warning mechanism is dynamically adjusted, and when necessary, a warning is issued to remind the driver to take a rest or adjust the driving state; through this multi-level analysis and judgment method, the accuracy and timeliness of warnings are ensured, thereby effectively improving driving safety.

The above descriptions are only used to explain the preferred embodiments of the present invention, and are not intended to limit the present invention in any form. Therefore, any modifications or changes made to the present invention under the same inventive spirit should still be included in the scope of protection intended by the present invention.

## Claims

1. A fatigue driving detection method, comprising:
a data collection step: collecting a data from a vehicle to continuously monitor a behavior of a driver and a movement of the vehicle;
a data processing step: transmitting the data to a cloud platform in real time and performing a preliminary data processing step;
a data analysis step: comparing the data with a rule table and generating a comparison result, and combining the comparison result with a schedule information to evaluate a fatigue status of the driver and determine whether a warning prompt needs to be issued; and
a data feedback and optimization step: recording the data, the comparison result and the warning prompt, and then feeding them back to the cloud platform through a machine learning model to optimize the rule table.

2. The fatigue driving detection method according to claim 1, wherein the data includes a physiological and behavioral data corresponding to the behavior of the driver and a driving data corresponding to the movement of the vehicle, the driving data at least includes vehicle speed, steering wheel angle, and lane departure, and the physiological and behavioral data at least includes facial expression, blink frequency, and head posture.

3. The fatigue driving detection method according to claim 1, wherein the preliminary data processing step includes data cleaning, data filtering and data standardization.

4. The fatigue driving detection method according to claim 1, wherein the rule table includes a standard parameter and a threshold for various driving behaviors, and the standard parameter and the threshold are formulated based on historical data and expert opinions.

5. The fatigue driving detection method according to claim 1, wherein the schedule information includes a current working hour of the driver and whether the driving time is day or night, and the warning prompt at least includes a sound prompt, a visual warning or a vibration prompt.

6. A fatigue driving detection system, comprising:
a data collector, disposed on a vehicle and configured to collect a data from the vehicle to continuously monitor a behavior of a driver and a movement of the vehicle;
a data processing unit, communicated to the data collector and configured to transmit the collected data to a cloud platform in real time and perform a preliminary data processing step; and
an analyzer, communicated to the data processing unit and the cloud platform, and configured to compare the data with a rule table and generate a comparison result, and combine the comparison result with a schedule information to evaluate a fatigue status of the driver and determine whether a warning prompt needs to be issued, and record the data, the comparison result and the warning prompt, and then feed them back to the cloud platform through a machine learning model to optimize the rule table.

7. The fatigue driving detection system according to claim 6, wherein the data collector includes an advanced driver assistance system and a driver monitoring system that are communicated with each other.

8. The fatigue driving detection system according to claim 7, wherein the data includes a physiological and behavioral data corresponding to the behavior of the driver and a driving data corresponding to the movement of the vehicle, the advanced driver assistance system correspondingly collects the driving data, the driver monitoring system correspondingly collects the physiological and behavioral data, the driving data at least includes vehicle speed, steering wheel angle, and lane departure, and the physiological and behavioral data at least includes facial expression, blink frequency, and head posture.

9. The fatigue driving detection system according to claim 6, wherein the rule table includes a standard parameter and a threshold for various driving behaviors, and the standard parameter and the threshold are formulated based on historical data and expert opinions.

10. The fatigue driving detection system according to claim 6, wherein the schedule information includes a current working hour of the driver and whether the driving time is day or night, and the warning prompt at least includes a sound prompt, a visual warning or a vibration prompt.
